# EUROPEAN PATENT APPLICATION

(11) **EP 4 585 095 A1**
(43) Date of publication of application: **16.07.2025**
(21) Application number: 24219873.7
(22) Date of filing: 13.12.2024
(51) Int. Cl.: A43C 11/16, A43B 5/04, F16G 11/12

(54) **BLOCKING DEVICE FOR A FASTENING CABLE OF SPORTING ITEMS**

(30) Priority: 09.01.2024 IT 202400000267
(71) Applicant: GI.DI. Meccanica S.p.A., 31028 Vazzola (TV) (IT)
(72) Inventor: GIUSTI, Dino, 31028 Vazzola (TV) (IT); CHINAZZI, Davide, 31028 Vazzola (TV) (IT)
(74) Representative: Giugni, Diego

(57) **Abstract**

The present invention relates to a device for locking a rope or cable, referred to as "wire support end" or even "cable lug" for closing sports articles, in particular sports footwear such as ski boots. The invention also relates to a sports article, preferably a footwear such as a ski boot, comprising said device. The device is particularly practical and functional especially in the event of replacement of damaged components.

## Description

### TECHNICAL FIELD OF THE INVENTION

The present invention relates to a device for locking a rope or cable, referred to as "wire support end" or even "cable lug" for closing sports articles, in particular sports footwear such as ski boots. The invention also relates to a sports article, preferably a footwear such as a ski boot, comprising said device.

### BACKGROUND OF THE INVENTION

Generally, a locking device according to the present invention is used should there arise the need to controllably approach/release a pair of flaps by winding and releasing at least one traction element, such as a cable or a rope. Fastening assemblies which allow the releasable tightening of a traction cable have long been known and used to obtain the controlled fastening of a pair of flaps, whether of sports footwear or other sports articles. Such assemblies substantially comprise at least one traction cable, which can be constrained with a first end portion to a flap and which can be associated with at least one portion to the other flap of said pair of flaps to be fastened by means of a cable guide element, and a reel-based or lever tightening device, fixed integrally joined with a flap of said pair of flaps, arranged and configured to tighten a second end portion of said traction cable.

Irrespective of the type of reel-based or lever tightening device used for tightening the second end portion of the cable, conventionally the first end portion of the cable is non-removably fixed to a flap of the article through known means such as for example stitches or in the case of metal cables more often rivets, screws or similar fixing elements. These types of fixing of the ends or terminals of the cables are for example normally used in hybrid closing systems comprising a lever or winding device or even only one or two levers more commonly observable in sports footwear such as ski boots.

Usually, on the terminal part of a cable or metal rope, there is inserted an element made of a turning, generally referred to as cable lug. The cable lug has a hole slightly larger than the diameter of the rope, such to be able house the rope. Once the rope has been inserted onto the hole of the cable lug, by means of a specially made mould, the cable lug is deformed/chamfered on the cable, preventing the latter from slipping off even when it is subjected to high loads. Once the rope-cable lug assembly has been created, the entirety is fixed on a flap of the shoe by means of a screw or a rivet.

Alternatively, the cable lug could be formed by a drilled cylindrical barrel, inserted on the terminal of the rope and chamfered/pressed on the rope, so as to prevent it from being detached from the rope once pulled.

At this point, the cable lug could be inserted into an undercut obtained on an element which is in turn fixed on the flap of the footwear.

Therefore, it is clear that the terminal cannot be released from the cable lug unless upon destroying the rivet or the non-removable fixing element with the risk of damaging the hull. Furthermore, it should be borne in mind that should the cable break, the replacement thereof involves the removal of the rivet from the engagement hole in the hull with the risk of damage mentioned above. Basically, the replacement is not easy at all given that the terminal thus fixed to the hull is not easy to remove. Therefore, the entire boot or article must often be replaced thus increasing the costs for the user.

### SUMMARY OF THE INVENTION

Therefore, the main task of the present invention is to provide a device for locking a tightening cable for sports articles adapted to be applied to a flap to be moved mutually towards/away by a second flap of the article, which overcomes the drawbacks mentioned above.

In the context of the present task, an object of the present invention to provide a reversible locking device of a terminal of a cable for tightening two flaps of a sports article.

A second object is to provide a device for safely locking the terminal of a cable capable of protecting it from potential damage.

A third object is to provide a locking device that is easy to mount and cost-effective to manufacture.

A fourth object is to provide a locking device which allows to easily replace the cable without damaging or having to replace the entire article.

The task, objects and advantages indicated above, as well as others which will be more apparent in the description below, are attained by a locking device as defined in claim 1. Further advantageous characteristics of the locking device according to the present invention are contained in the dependent claims below.

### BRIEF DESCRIPTION OF THE FIGURES

Further characteristics and advantages of present the invention will become more apparent from the following description of an embodiment, provided by way of non-limiting example, with reference to the attached figures, wherein:
- figure 1 shows a front-lateral view of a sports article comprising the locking device for a cable for tightening the two flaps of said article, according to the present invention;
- figure 2 shows an exploded view of the locking device for a cable for tightening the two flaps of the article of figure 1;
- figure 3 shows a top axonometric view of a component of the device of figure 2;

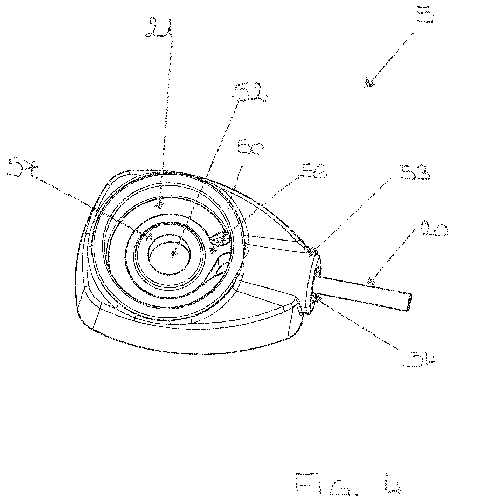

- figure 4 shows an axonometric view of the component of figure 3 with the cable for tightening two flaps of a sports article housed therein;
- figure 5 shows a top axonometric view of a step for the engagement of a cable for tightening two flaps of a sports article in the component of figure 3;
- figure 6A, 6B and 6C respectively show a top view of the device of figure 2 assembled with an end portion of a cable for tightening two flaps of a sports article, a cross-sectional view along the plane A-A of figure 6A and a cross-sectional view along the plane B-B of figure 6B.

### DETAILED DESCRIPTION OF THE INVENTION

The idea underlying the present invention is to facilitate the operations for repairing the components of a tightening assembly of two flaps of a sports article. In particular, the tightening assemblies of the two flaps of a hull of a ski boot are nowadays, especially for racing ski boots, which are very complex due to the need for fine adjustments useful both for the performance required and comfort of use. However, such complexity also requires great reliability and safety which must be provided by robust systems and, also in case of failure, easy to repair.

Therefore, the locking device for a cable for tightening two flaps of a sports article according to the present invention was designed so as to meet all the needs mentioned above.

In this regard, the device advantageously generally comprises a housing which can be applied on one of said flaps and adapted to contain an end portion of said cable, a reversible locking mechanism of said end in said housing, wherein said housing houses said circular-flat shaped end portion and said mechanism comprises an element adapted to compress said circular flat portion within the housing acting orthogonally on its entire circular bending.

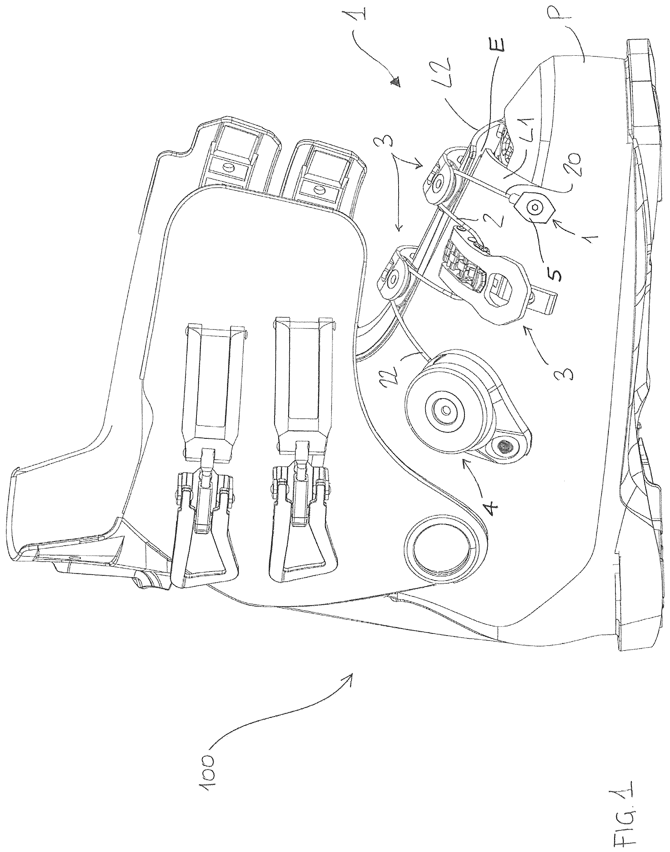

As shown in figure 1, in an embodiment of the invention, a locking device for a cable 2 for tightening 2 two flaps L1, L2 of a ski boot 100 is generally indicated with reference numeral 1. This device is part of a tightening assembly provided with a cable 2 anchored with an end portion of a first end 20 to a first flap L1 of the boot, a plurality of guide means 3 for the cable alternately arranged on one side and on the other side of the joining edge E between the two flaps L1, L2 and a reel-based or lever tightening device 4 associated with an end portion of a second end 22 and fastened to a first L1 or second L2 flap for adjusting the tension of the cable when approaching or moving away the two flaps.

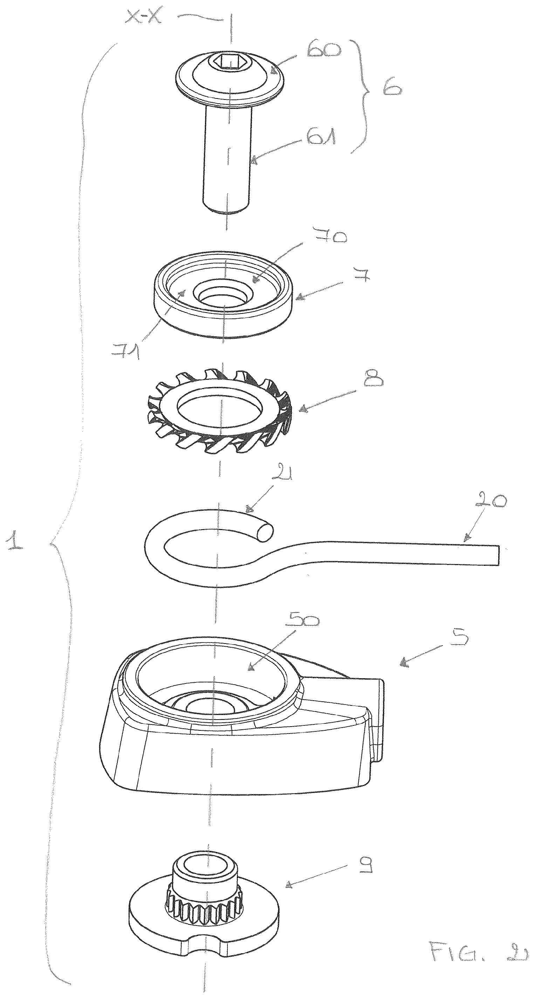

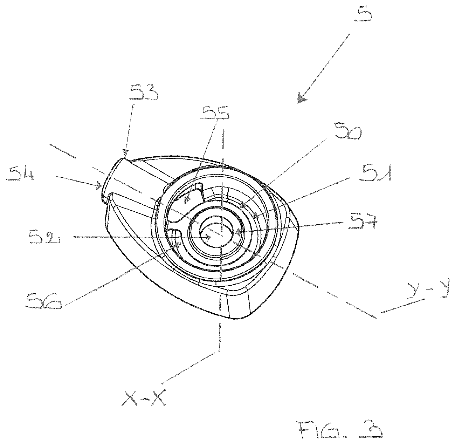

In particular, the locking device 1 comprises a housing 5 firmly fixed on a first flap L1 in proximity of the tip P of the boot 100. As shown in figure 2, the housing 5 is a block comprising a seat 50 or cradle for housing an end portion 21 of said first end 20 of the cable 2. Advantageously, the seat is conformed or shaped so as to house said ring-bent portion. Preferably, the seat 50 comprises an annular bed 51 adapted to house part of the circumferential cross-section of the cable so as to increase their stability when locked therein with the fixing mechanism (figure 3). It should be observed that said bed 51 is obtained directly in the seat 50 which in turn is obtained in said block. The housing 5 may be fixed to the outer surface of the boot using conventional means such as glue, rivets or screws.

Furthermore, it should be borne in mind that the seat 50 is shaped so as to house a cable with a radius of curvature slightly smaller than the minimum beyond which its deformation becomes permanent. Obviously, such radius of curvature depends on the type of cable (material), on its diameter and on the number of wires that form the cable should it be a braided multiple strand rope. In any case, the seat will be sized progressively depending on these characteristics so as to adapt specifically and obtain a permanent ring-like bending. This adjustment is within the reach of the person skilled in the art.

The seat 50 is then centrally traversed by a hole 52 for engagement with a fastening screw, as explained below, whose axis X-X is orthogonal to the plane of the seat (figure 3). Preferably, said hole is a through hole and it is surrounded by a raised edge 57 so as to axially define the annular bed 51. Said seat also comprises an inlet portion 53 for the cable directed with the orthogonal axis Y-Y with respect to the axis X-X of the hole, that is parallel to the plane of the seat. In particular, said inlet portion 53 is provided with a circular or oblong opening 54 towards the external and a shaped opening 55 towards the internal of the seat. While the opening towards the external lies on a plane orthogonal to the one of the seat, the shaped opening towards the internal has a development such to advantageously form a guide for the insertion into the circular seat. The annular bed 51 mentioned above therefore comprises an end bottom 56 closed in proximity of said shaped opening (figure 3).

The reversible locking mechanism of the end portion 21 of the cable 2 comprises an element 6 for pressing said portion into the seat 50. This pressing element is preferably a screw provided with a head 60 and a threaded stem 61. The stem is screwed into the hole 52 of the seat 50 so that the head 60 presses on the entire circumference defined by the annular folding of the end of the cable. The head of the screw may have conventional recesses adapted to grip a tool such as a screwdriver or Allen wrench.

According to a preferred embodiment, between the head 60 and the end portion 21 of the cable there is interposed a washer 7. The advantage of the washer lies in the fact that it increases pressing surfaces and distributes this force more evenly using a conventional screw. Furthermore, it may form a thickness and a radial extension such to adapt any type of screw to the seat and to the diameter of the circular folding of the end portion of the cable. Preferably, the washer comprises a first recessed face 70 for creating a housing seat of the head 60 of the screw and a second face 71 opposite to the first face and flat to form an abutment surface of the circular end portion 21 of the cable 2.

According to a different embodiment, there may be provided for pressing means 8 provided with teeth which increase the grip on the cable for the retention, for example a toothed washer (figure 2). In particular, the teeth are preferably faced inclined in the reverse direction with respect to the direction of removal of the cable of the seat 50. Should one desire to increase the bracketing force on the cable and should the cable be particularly robust, this solution may be advantageous. This toothed washer may be directly interposed between the head 60 of the screw and the end portion 21 of the cable or between the washer 7 mentioned above and the end portion 21 of the cable.

According to a further embodiment, the locking mechanism may comprise a T nut 9 which is screwed onto the screw 6 mentioned above so as to lock the housing 5 on the boot 100 (figure 2). As a matter of fact, should one wish to fix the device 1 of the invention directly by using the pressing screw of the cable 2, one can use a screw that is long enough to pass through a hole obtained on the boot and screw the nut from inside the boot so as to simultaneously obtain the fixing of the housing 5 to the boot and the locking of the cable 2, therefore simplifying the system.

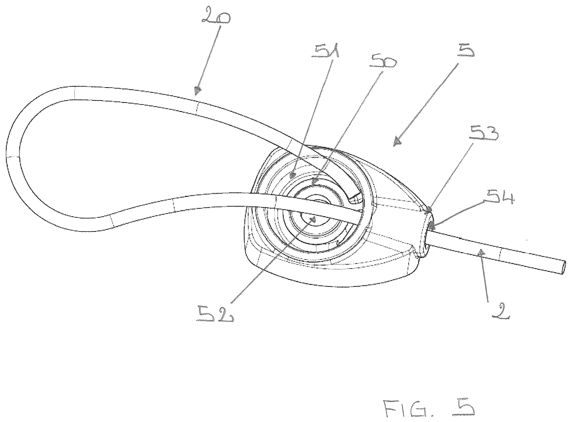

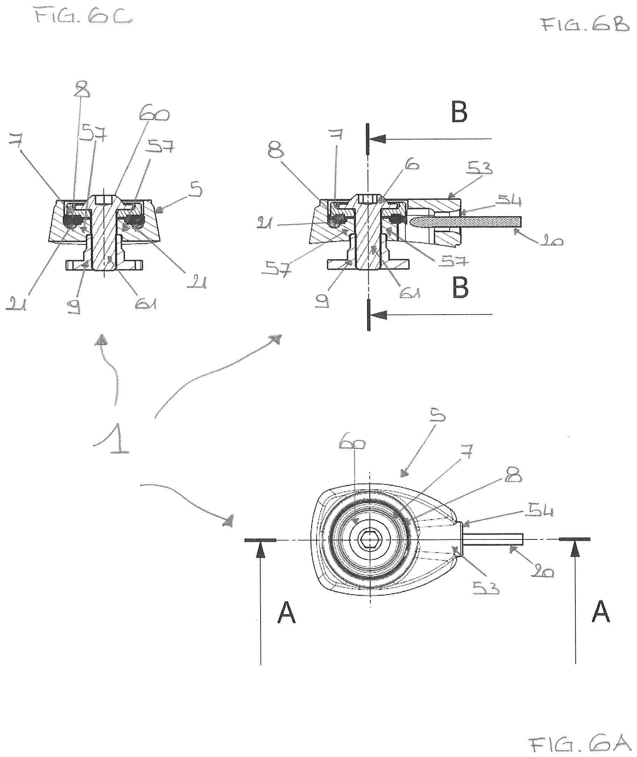

The assembly of the device 1 for locking a cable for tightening the two flaps of a sports article according to the invention is, in the light of the above, simple and reliable, especially in case breakage of components that need replacement. As a matter of fact, as shown in figure 5, a first end 20 of the cable 2 for tightening two flaps of a sports article is inserted into the housing 5 through the circular opening 54 of its inlet portion 53 for a section such to form an elongated folding. Subsequently, the end of the end portion 21 is placed on the bottom 56 of the bed 51 and the cable pulled by the opening 54 so as to reduce the folding and make it be accommodated in the bed with its end portion 21. Now, it will be sufficient to insert the screw 6 with the washer 7 into the seat 50 so that the stem 61 engages the hole 52 and screw the screw to tighten the end portion 21 firmly in the housing 5 (figure 6A). Should the toothed washer 8 be present, the latter will be interposed between the washer 7 and the end portion 21.

As shown by the sections of figures 6B and 6C, respectively in the direction longitudinal and transversal to the cable 2, the end portion 21 is firmly housed in the housing 5 due to the pressing that the screw 6 exerts on the washer 7 causing the deformation thereof. In this manner, the cable which protrudes from the opening 54 with the first terminal segment 20 is prevented from slipping off. The device 1 is therefore simple and compact to manufacture.

Also the opposite disassembly operation is very simple and particularly advantageous should one of the components be damaged. As a matter of fact, it is sufficient to carry out the reverse operations with respect to those just described above to release all the components of the device and replace those possibly damaged.

A further object of the present invention is a tightening assembly of a cable for joining two flaps of a sports article, comprising at least one traction cable 2 fastened with an end portion of a first end 20 to a first flap L1 of a sports article, a plurality of means 3 for guiding the cable alternately arranged on one side and on the other side of the joining edge E between the two flaps L1, L2 and reel-based or lever tightening device 4 associated with an end portion of a second end 22 fastened to a first L1 or second L2 flap to adjust the tension of the cable when approaching or moving away the two flaps, wherein said end portion of the first end is associated with said locking device 1 described above.

A further object is a sports article comprising the locking device 1 described above or the corresponding tightening assembly.

In the light of the above, it is clear that the drawbacks of the prior art mentioned above have been overcome and significant advantages have been achieved.

The possibility to easily disassemble the device allows the replacement mentioned above to be carried out rapidly and effectively without having to replace the entire sports article.

The compactness and robustness of the device ensures practicability and resistance to stresses.

The retention strength of the cable being distributed on a large surface provides the strength mentioned above, without deforming the cable so as to weaken the ultimate tensile strength thereof.

Further variants are within the reach of the person skilled in the art without departing from the scope of protection defined by the attached claims.

For example, the materials for obtaining the components of the device of the invention may be both plastic and metallic depending on the particular needs or preferences. The pressing elements may be pins or blocks which can be inserted into the seat with pressing and/or snap-coupling mechanisms and maintained therein pressed by said mechanisms.

## Claims

1. Device (1) for locking a cable (2) for tightening two flaps (L1,L2) of a sports article (100), comprising:
- a housing (5) which can be applied onto one of said flaps (L1) adapted to house an end portion (21) of said cable (2),
- a mechanism (6,7;8;9) for reversibly locking said end into said housing, wherein
- said housing (5) houses said end portion (21) in a circular-flat shape and
- said mechanism comprises an element (6) adapted to press said circular flat portion into the housing by acting orthogonally on all around its circular bending.

2. Locking device (1) according to claim 1, wherein said housing (5) is a block comprising a seat (50) for housing said end portion (21) of a first end (20) of the cable (2).

3. Locking device (1) according to claim 2, wherein said seat (50) comprises an annular bed (51) adapted to house part of the circumferential cross-section of the cable.

4. Locking device (1) according to claim 2 or 3, wherein said seat (50) is shaped so as to house the cable (2) with a radius of curvature slightly smaller than the minimum beyond which its deformation becomes permanent.

5. Locking device (1) according to any one of claims 2 to 4, wherein said seat (50) is traversed by a central-through hole (52) whose axis (X-X) is orthogonal to the plane of the seat, and comprises an portion (53) for the entry of the cable oriented with an orthogonal axis (Y-Y) with respect to the axis of the hole, said inlet portion having an outward circular or oblong opening (54) and an opening (55) shaped towards the internal of the latter such to form a guide for inserting the cable (2) into the circular seat (50).

6. Locking device (1) according to any one of claims 1 to 5, wherein said pressing element (6) is a screw provided with a head (60) and a threaded stem (61), the head being so that to press on the entire circumference defined by the annular bending of the end (21) of the cable (2), the stem being suitable to be screwed into a central hole (52) of the seat (50).

7. Locking device (1) according to any one of claims 1 to 6, further comprising at least one washer (7;8) interposed between said pressing element (6) and said end portion (21) of the cable (2), preferably a washer (7) with a first hollow face to house a head (60) of a screw (6) and a second flat face (71) to form an abutment surface, and/or a toothed washer (8).

8. Locking device (1) according to any one of claims 1 to 5 and 7, further comprising a T nut (9) which is screwed onto the screw (6) mentioned above so that to lock the housing (5) onto said article (100).

9. Fastening assembly for a pair of flaps (L1 ,L2) of a sports article (100), comprising:
- at least one traction cable (2) fastened with an end portion (21) of a first end (20) to a first flap (L1) of said sports article (100),
- a plurality of guide means (3) for the cable alternately arranged on one side and on the other side of the joining edge (E) between said pair of flaps (L1 ,L2), and
- a reel-based or lever tightening device (4) associated with an end portion of a second end (22) fastened to one of said first (L1) or second (L2) flaps to adjust the tension of the cable when approaching or moving away the two flaps, wherein
- said end portion (21) of the first end (20) is associated with a locking device (1) according to any one of claims 1 to 8.

10. Sports article (100) comprising a locking device (1) according to any one of claims 1 to 8 or a tightening assembly according to claim 9.
